# EUROPEAN PATENT APPLICATION

(11) **EP 4 458 778 A1**
(43) Date of publication of application: **06.11.2024**
(21) Application number: 23899237.4
(22) Date of filing: 07.03.2023
(51) Int. Cl.: C02F 1/467, C02F 1/72

(54) **ANODE AND CATHODE SYNERGISTIC ELECTROCATALYTIC SYSTEM FOR WASTEWATER TREATMENT AND APPLICATION**

(30) Priority: 06.12.2022 CN 202211559596
(71) Applicant: Dalian University Of Technology, Dalian, Liaoning 116024 (CN)
(72) Inventor: QUAN, Xie, Dalian, Liaoning 116024 (CN); WANG, Kaixuan, Dalian, Liaoning 116024 (CN); QIN, Xin, Dalian, Liaoning 116024 (CN); CAO, Peike, Dalian, Liaoning 116024 (CN); CHEN, Shuo, Dalian, Liaoning 116024 (CN); YU, Hongtao, Dalian, Liaoning 116024 (CN)
(74) Representative: Murgitroyd & Company
(86) International application number: PCT/CN2023/080060
(87) International publication number: WO 2024/119637

(57) **Abstract**

An anode and cathode synergistic electrocatalytic system for wastewater treatment and an application, which belong to the field of wastewater treatment. The method comprises the following steps: using an electrode having a "dual function" as a cathode (2-1), sequentially arranging same and an anode (2-2) in a crisscrossed and parallel mode and fixing same into an electrode group, and placing the electrode group in a reaction tank (2-3) which has an aeration device b (2-4) at the bottom thereof, separately connecting the cathode (2-l) and the anode (2-2) of the electrode group to a power supply (2-5), and performing electrocatalytic degradation on wastewater. In the electrocatalytic degradation process, a synergistic electrocatalytic degradation effect of the anode and the cathode is achieved by means of the mutual coordination of heterogeneous electro-fenton of the cathode (2-1) and oxidation of the anode (2-2). The cathode ad anode synergistic electrocatalytic process has a good wastewater treatment effect, high current efficiency, low energy consumption, and low operation and maintenance costs.

## Description

### TECHNICAL FIELD

The present invention is applied to wastewater treatment, and particularly belongs to the field of wastewater treatment by the anode and cathode synergistic electrocatalytic system and application.

### BACKGROUND

Industrial wastewater has a wide range of sources, complex composition, and contains a large number of difficult to treat substances. Among them, the refractory organic pollutants in industrial wastewater are highly toxic, persistent and difficult to biodegrade, which is difficult to be effectively degraded by traditional biological and chemical oxidation methods. At present, electrochemical advanced oxidation technologies, such as electrochemical anodic oxidation and electro-Fenton, are effective methods to remove refractory organic pollutants from industrial wastewater. Electrochemical anodic oxidation mainly relies on the anode to degrade organic pollutants, which possesses the advantages of strong oxidation performance, high mineralization rate, environmental friendliness and easy operation. However, this technology has the problems of low current efficiency and high energy consumption. The homogeneous electro-Fenton process produces H₂O₂ in situ by electrocatalytic O₂ reduction reaction on the cathode surface, whcih further reacts with Fe²⁺ to generate •OH for degradation of organic pollutants. This process can synthesize H₂O₂ in situ, avoided the extra addition of H₂O₂ in Fenton process, thus avoiding the risk of explosion of high concentration of H₂O₂ during the operation. However, there are some problems in the homogeneous electro-Fenton process, such as narrow pH application range and production of a large amount of iron-containing sludge.

### SUMMARY

The present aims to provide an anode and cathode synergistic electrocatalytic system and application, which combines the process of cathodic heterogeneous electro-Fenton and anodic oxidation to improve the current efficiency, enhance the wastewater treatment efficiency and reduce the operating cost.

### Technical solution of the present invention:

Anode and cathode synergistic electrocatalytic system for wastewater treatment, wherein:
The cathodes and anodes are arranged successively cross parallel and fixed into the electrode group; the electrode group is arranged in a reaction tank with an aeration device at the bottom; the cathodes and the anodes are respectively connected with a power supply to treat wastewater in the reaction tank;
The cathode is prepared by uniformly loading the "dual-function" catalyst onto the substrate material; the "dual-function" catalyst possesses two types of catalytic active sites, one of which can electrosynthesis of H₂O₂ via the 2e⁻ O₂ reduction reaction and then the produced H₂O₂ is decomposed in situ at the other active site to generate •OH for wastewater treatment;
The "dual-function" catalyst includes: the heteroatom-doped carbon material catalyst, the porous carbon catalyst supported by metal nanoparticles, the porous carbon catalyst supported by metal oxide nanoparticles, the carbon catalyst supported by metal single atoms, and the carbon catalyst supported by metal clusters; and
The anode includes: the carbon-based electrode, the titanium-based metal-oxide electrode, and the boron-doped diamond electrode.

Further, the anode and cathode synergistic electrocatalysis includes: the collaborative electrocatalysis of cathodic heterogeneous electro-Fenton and anodic direct oxidation and indirect oxidation, and the collaborative electrocatalysis of cathode reduction and anode oxidation.

Further, the titanium-based metal-oxide electrode includes: titanium-based tin antimony oxide coated electrode, titanium-based ruthenium iridium oxide coated electrode, and titanium-based lead dioxide electrode.

Further, the heteroatom includes: one or more of N, O, F, P, and S, wherein the amount of heteroatom doping is 0.1 wt%~20 wt%.

Further, the metal includes: one or more of Fe, Co, Ni, Cu, and Mn.

Further, the substrate material of cathode includes: carbon-based materials, metal plate, and metal mesh, in which the carbon-based materials includes: graphite sheet, carbon cloth, carbon felt, and carbon paper, and the metal includes: Fe, Cu, Ti, Ni, and Al.

Further, the electrode gap between the cathode and the anode is fixed and consistent, which is <10 cm.

Further, O₂, air, or the mixture of O₂ and air is exposed to the electrolyte solution during electrocatalytic process.

Further, the current density applied in electrocatalytic process is 0.1-200 mA cm⁻², preferably 0.5-50 mA cm⁻².

The invention also provides the application of the electrocatalytic system in wastewater treatment.

Advantages of the invention: the anode and cathode synergistic electrocatalytic system has the advantages of simple and easy to operation, mild reaction conditions, without need the expensive raw materials and equipment, wide range of pH applications, no iron-containing sludge and secondary pollution, and without addition of Fenton catalysts. The cathode in the electrochemical anodic oxidation process generally serves as the counter electrode, and does not contribute significantly to the degradation of refractory pollutants. The anode and cathode synergistic electrocatalytic system provided in this invention effectively couples the cathodic heterogeneous electro-Fenton with the electrochemical anodic oxidation process, which can fully exert the electrocatalytic efficiency of the cathode and anode at the same time. The pollutants in wastewater can be oxidized on the anode surface and further degraded and mineralized via •OH oxidation generated on the cathode surface by the heterogeneous electro-Fenton reaction. The cathodic "dual-function" provided in this invention can produce H₂O₂ in situ via 2e⁻ O₂ reduction reaction and promote H₂O₂ decomposition to generate •OH for degrading organic pollutants, which can avoid the thorny problems of pH-dependence and iron sludge discharge encountered in homogeneous electro-Fenton reaction. In addition, aeration process can not only provide sufficient O₂ for the cathodic heterogeneous electro-Fenton reaction, but also play a stirring role to enhance the diffusion and mass transfer of pollutants. Thus the proposed anode and cathode synergistic electrocatalytic system can degrade and mineralize pollutants effectively with high current efficiency, low energy consumption, low operation and maintenance costs for wastewater treatment.

### DESCRIPTION OF DRAWINGS

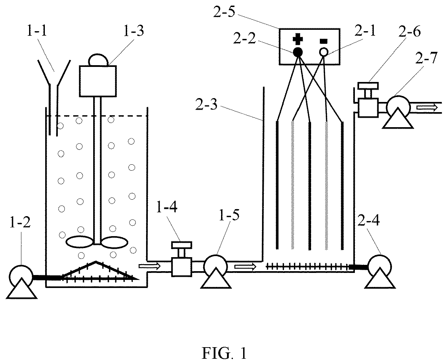

FIG. 1: Anode and cathode synergistic electrocatalytic system for wastewater treatment.

In the figure, 1-1: feeding device, 1-2: aeration device a, 1-3: mixing device, 1-4: valve a, 1-5: pump a, 1-6: wastewater tank, 2-1: cathodes, 2-2: anodes, 2-3: reaction tank, 2-4: aeration device b, 2-5: power supply, 2-6: valve b, 2-7: pump b.

### DETAILED DESCRIPTIONS

The specific implementation of the present invention will be described in detail below in conjunction with the technical solution.

The invention provides an anode and cathode synergistic electrocatalytic system for wastewater treatment, as shown in Fig. 1, including a wastewater injection system and sequentially connected a synergetic electrocatalytic treatment system, wherein the wastewater injection system includes: feeding device 1-1, aeration device a 1-2, mixing device 1-3, valve a 1-4, pump a 1-5, and wastewater tank 1-6, and the synergetic electrocatalytic treatment system includes: cathodes 2-1, anodes 2-2, reaction tank 2-3, aeration device b 2-4, power supply 2-5, valve b 2-6, pump b 2-7.

The aeration device a 1-2, mixing device 1-3, and feeding device 1-1 are set at the inner bottom, inside, and upside of wastewater tank 1-6 in the wastewater injection system, respectively. The bottom of the wastewater tank 1-6 is connected with the bottom of the reaction tank 2-3 through a pipeline. The pipeline is equipped with valve a 1-4 and pump a 1-5.

The aeration device b 2-4 and electrode group are set at the inner bottom and inside of reaction tank 2-3 in the synergetic electrocatalytic treatment system, respectively. The electrode group is composed of a plurality of cathodes 2-1 and anodes 2-2 successively cross and parallel arranged and fixed. The cathode 2-1 and anode 2-2 are respectively connected to power supply 2-5. The side wall of reaction tank 2-3 is provided with a pipeline connecting valve b 2-6 and pump b 2-7, which is arranged on the upper side wall of the reaction tank 2-3.

The invention relates to an operation method of anode and cathode synergistic electrocatalytic system for wastewater treatment, comprising the following steps:
(1) Wastewater injection: the feeding device 1-1 can be used to add electrolyte according to the demand (the wastewater with high conductivity does not need to add electrolyte); aeration treatment of wastewater is carried out using aeration device a 1-2, and O₂, air, or a mixture of O₂ and air can be exposed to the electrolyte solution during electrocatalytic process; mixing device 1-3 can be used to stir wastewater; the flow velocity of wastewater into the reaction tank 2-3 is controlled by valve a 1-4 and pump a 1-5;
(2) Anode and cathode synergistic electrocatalytic treatment: the "dual-function" electrodes are adopted as the cathodes 2-1; the cathodes 2-1 and anodes 2-2 are arranged successively cross parallel and fixed into the electrode group; the electrode group is attached to the inner wall of the reaction tank 2-3; aeration device b 2-4 is arranged at the bottom of reaction tank 2-3, and O₂, air, or the mixture of O₂ and air is exposed to the electrolyte solution during electrocatalytic process using aeration device b 2-4 according to demand; the cathodes 2-1 and anodes 2-2 are respectively connected with power supply 2-5 to treat wastewater; the treated wastewater after electrocatalysis is controlled by valve b 2-6 and pump b 2-7;

Wherein the cathode is prepared by uniformly loading the "dual-function" catalyst onto the substrate material; the "dual-function" catalyst possesses two types of catalytic active sites, one of which can electrosynthesis of H₂O₂ via the 2e⁻ O₂ reduction reaction and then the produced H₂O₂ is decomposed in situ at the other active site to generate •OH for wastewater treatment; wherein the "dual-function" catalyst includes: the heteroatom-doped carbon material catalyst, the porous carbon catalyst supported by metal nanoparticles, the porous carbon catalyst supported by metal oxide nanoparticles, the carbon catalyst supported by metal single atoms, and the carbon catalyst supported by metal clusters; further, the substrate material of cathode includes: carbon-based materials, metal plate, and metal mesh, in which the carbon-based materials includes: graphite sheet, carbon cloth, carbon felt, and carbon paper, and the metal includes: Fe, Cu, Ti, Ni, and Al;

Wherein the anode includes: the carbon-based electrode, the titanium-based metal-oxide electrode, and the boron-doped diamond electrode; further, the titanium-based metal-oxide electrode includes: titanium-based tin antimony oxide coated electrode, titanium-based ruthenium iridium oxide coated electrode, and titanium-based lead dioxide electrode;
wherein the electrode gap between the cathode and the anode is fixed and consistent, which is <10 cm;

Wherein the current density applied in electrocatalytic process is 0.1-200 mA cm⁻², preferably 0.5-50 mA cm⁻².

### Example 1

The oxygen-doped carbon nanotube electrode (15 cm × 15 cm) is served as the cathode, in which the amount of oxygen doping is ~12wt%, and the Ti/SnO₂-Sb electrode (15 cm × 15 cm) is adopted as the anode. The cathodes and anodes are arranged successively cross parallel under the electrode gap of 2 cm and fixed into the electrode group with four catalytic reaction units. The cathodes and anodes are respectively connected to the power supply with copper wires. The wastewater containing phenol, 2, 4-dichlorophenol, sulfamethoxazole, and levofloxacin at the concentration of 20 mg L⁻¹ is treated by the synergistic electrocatalytic process, respectively. 50 mM Na₂SO₄ (electrolyte) is added into wastewater. After aeration O₂ treatment for 0.5 h, the wastewater is flowed into the reaction tank, and electrolyzed under current density of 1 mA cm⁻² (the total current value of 0.92 A) for 2.0 h. O₂ is bubbled into the reaction solution.

The removal ratios of phenol, 2, 4-dichlorophenol, sulfamethoxazole, and levofloxacin after the synergistic electrocatalytic treatment are 98%, 99%, 100%, 99%, and 100%, and TOC removal ratios are 73%, 66%, 92%, 72%, and 69%, respectively.

### Example 2

The graphite plate is served as the anode. The others operation conditions are consistent with those of Example 1. Phenol (20 mg L⁻¹) is degraded by the synergistic electrocatalytic process.

The removal ratio of phenol and TOC removal are 96% and 68%, respectively.

### Example 3

The Co-Fe dual-metal-atomic-site porous carbon electrode is served as the cathode. The others operation conditions are consistent with those of Example 1. Phenol (20 mg L⁻¹) is degraded by the synergistic electrocatalytic process.

The removal ratio of phenol and TOC removal are 99% and 78%, respectively.

### Example 4

2,4-dichlorophenoxyacetic acid (2,4-D, 50 mg L⁻¹) is degraded by the synergistic electrocatalytic process under pH 10.1. The others operation conditions are consistent with those of Example 1.

The removal ratio of 2,4-D and TOC removal are 97% and 76%, respectively.

### Example 5

The secondary effluent of real industrial wastewater (pH 7.1, COD₀ = 312 mg L⁻¹, TOC₀ = 79 mg L⁻¹) is treated under 2 mA cm⁻² (the total current value of 1.84 A) for 3.0 h by the synergistic electrocatalytic process. The others operation conditions are consistent with those of Example 1.

The COD and TOC values after the synergistic electrocatalytic treatment decrease to 45 mg L⁻¹ and 19 mg L⁻¹.

### Example 6

The oxygen-doped carbon nanotube electrode is served as the cathode, and the Ti/PbO₂ electrode is adopted as the anode. The others operation conditions are consistent with those of Example 5.

The COD and TOC values after the synergistic electrocatalytic treatment decrease to 39 mg L⁻¹ and 15 mg L⁻¹.

### Example 7

The Fe single atoms carbon nanosphere electrode is served as the cathode, and the Ti/RuO₂-IrO₂ electrode is adopted as the anode. The others operation conditions are consistent with those of Example 5.

The COD and TOC values after the synergistic electrocatalytic treatment decrease to 49 mg L⁻¹ and 21 mg L⁻¹.

### Comparison example 1

The oxygen-doped carbon nanotube electrode is served as the working electrode (cathode), and Pt plate is adopted as the counter electrode (anode). Phenol (20 mg L⁻¹) is degraded by the only electro-Fenton process. The others operation conditions are consistent with those of Example 1.

The removal ratio of phenol and TOC removal are only 51% and 18%, respectively.

### Comparison example 2

The Ti/SnO₂-Sb electrode is served as the working electrode (anode), and Ti plate is adopted as the counter electrode (cathode). Phenol (20 mg L⁻¹) is degraded by the only electrochemical anodic oxidation process. The others operation conditions are consistent with those of Example 1.

The removal ratio of phenol and TOC removal are only 53% and 19%, respectively.

### Comparison example 3

The Fe single atoms carbon nanosphere electrode is served as the working electrode (cathode), and Pt plate is adopted as the counter electrode (anode). The secondary effluent of real industrial wastewater (pH 7.1, COD₀ = 312 mg L⁻¹, TOC₀ = 79 mg L⁻¹) is treated by the only electro-Fenton process. The others operation conditions are consistent with those of Example 5.

The COD and TOC values after the only electro-Fenton treatment decrease to 177 mg L⁻¹ and 43 mg L⁻¹.

### Comparison example 4

The Ti/RuO₂-IrO₂ electrode is served as the working electrode (anode), and Ti plate is adopted as the counter electrode (cathode). The secondary effluent of real industrial wastewater (pH 7.1, COD₀ = 312 mg L⁻¹, TOC₀ = 79 mg L⁻¹) is treated by the only electrochemical anodic oxidation process. The others operation conditions are consistent with those of Example 5.

The COD and TOC values after the only electrochemical anodic oxidation treatment decrease to 188 mg L⁻¹ and 47 mg L⁻¹.

## Claims

1. Anode and cathode synergistic electrocatalytic system for wastewater treatment, wherein:
the system includes: the cathodes and anodes are arranged successively cross parallel and fixed into the electrode group; the electrode group is arranged in a reaction tank with an aeration device at the bottom; the cathodes and the anodes are respectively connected with a power supply to treat wastewater in the reaction tank;
the cathode is prepared by uniformly loading the "dual-function" catalyst onto the substrate material;
the "dual-function" catalyst includes: the heteroatom-doped carbon material catalyst, the porous carbon catalyst supported by metal nanoparticles, the porous carbon catalyst supported by metal oxide nanoparticles, the carbon catalyst supported by metal single atoms, and the carbon catalyst supported by metal clusters; and
the anode includes: the carbon-based electrode, the titanium-based metal-oxide electrode, and the boron-doped diamond electrode.

2. Anode and cathode synergistic electrocatalytic system for wastewater treatment according to claim 1, wherein the anode and cathode synergistic electrocatalysis includes: the collaborative electrocatalysis of cathodic heterogeneous electro-Fenton and anodic direct oxidation and indirect oxidation, and the collaborative electrocatalysis of cathode reduction and anodic oxidation.

3. Anode and cathode synergistic electrocatalytic system for wastewater treatment according to claim 1, wherein the titanium-based metal-oxide electrode includes: titanium-based tin antimony oxide coated electrode, titanium-based ruthenium iridium oxide coated electrode, and titanium-based lead dioxide electrode.

4. Anode and cathode synergistic electrocatalytic system for wastewater treatment according to claim 1, wherein the heteroatom includes: one or more of N, O, F, P, and S, wherein the amount of heteroatom doping is 0.1 wt%~20 wt%.

5. Anode and cathode synergistic electrocatalytic system for wastewater treatment according to claim 1, wherein the metal includes: one or more of Fe, Co, Ni, Cu, and Mn.

6. Anode and cathode synergistic electrocatalytic system for wastewater treatment according to claim 1, wherein the substrate material of cathode includes: carbon-based materials, metal plate, and metal mesh; in which the carbon-based materials includes: graphite sheet, carbon cloth, carbon felt, and carbon paper, and the metal includes: Fe, Cu, Ti, Ni, and Al.

7. Anode and cathode synergistic electrocatalytic system for wastewater treatment according to claim 1, wherein the electrode gap between the cathode and the anode is fixed and consistent, which is <10 cm.

8. Anode and cathode synergistic electrocatalytic system for wastewater treatment according to claim 1, wherein O₂, air, or the mixture of O₂ and air is exposed to the electrolyte solution during electrocatalytic process.

9. Anode and cathode synergistic electrocatalytic system for wastewater treatment according to claim 1, wherein the current density applied in electrocatalytic process is 0.1-200 mA cm⁻².

10. The electrocatalytic system described in any one of the claims 1-9 is applied to wastewater treatment.
